# EUROPÄISCHE PATENTSCHRIFT

(11) **EP 1 575 813 B1**
(45) Veröffentlichungstag und Bekanntmachung des Hinweises auf die Patenterteilung: **27.02.2008**
(21) Anmeldenummer: 03813523.2
(22) Anmeldetag: 04.08.2003
(51) Int. Cl.: B60S 1/42

(54) **WISCHEBEL MIT EINEM WISCHARM UND EINEM WISCHBLATT**
WIPER CRANK WITH A WIPER ARM AND A WIPER BLADE
ENSEMBLE BRAS D'ESSUIE-GLACE COMPORTANT UN BRAS D'ESSUIE-GLACE ET UNE RACLETTE D'ESSUIE-GLACE

(30) Priorität: 19.12.2002 DE 10259479
(43) Veröffentlichungstag der Anmeldung: 21.09.2005
(73) Patentinhaber: ROBERT BOSCH GMBH, 70442 Stuttgart (DE)
(72) Erfinder: WEILER, Michael, 76131 Karlsruhe (DE); ZIMMER, Joachim, 77880 Sasbach (DE); RAPP, Harald, 77815 Buehl (DE); DIETRICH, Jan, 77815 Buehl (DE)
(86) Internationale Anmeldenummer: PCT/DE2003/002602
(87) Internationale Veröffentlichungsnummer: WO 2004/056626

(56) Entgegenhaltungen:
- WO-A-02/12033
- WO-A-02/066300
- DE-A- 2 364 622
- DE-A- 10 109 088
- FR-A- 1 217 680

## Beschreibung

### Stand der Technik

Die Erfindung geht aus von einem Wischhebel nach dem Oberbe- griff des Anspruchs 1.

Aus der DE 198 56 300 A1 ist ein gattungsbildender Wischhebel mit einem Wischarm und einem Wischblatt bekannt. Das Wischblatt weist einen federelastischen, bogenförmig gekrümmten Wischleistenträger auf, an dem eine langgestreckte Wischleiste befestigt ist, deren Wischlippe sich auf einer konkaven Seite des Wischleistenträgers entlang desselben erstreckt. Ferner umfasst das Wischblatt einen an einer konvexen Seite des Wischleistenträgers angeordneten Windabweiser. Der stangenförmige Wischarm ist über ein Gelenk mit dem Wischblatt verbunden. Das Wischblatt weist hierfür in seinem Längsmittelabschnitt eine von einer Querbohrung gebildete Lagerstelle für einen am Wischarm befestigten Gelenkbolzen auf.

Weiterhin sind aus der FR-A-1 217 680 und aus der WO-A-02/12033 Wischhebel mit den Merkmalen des Oberbegriffs des Anspruchs 1 bekannt.

### Vorteile der Erfindung

Die Erfindung geht aus von einem Wischhebel mit einem Wischarm und einem Wischblatt.

Es wird vorgeschlagen, dass der Wischarm und das Wischblatt gelenkfrei miteinander verbunden sind. Es kann eine besonders einfache und flach bauende Konstruktion erreicht und insbesondere können die Bauteileanzahl, der Montageaufwand und die Kosten reduziert werden. Mithilfe eines Reversiermotors kann der Wischhebel in eine erweiterte Parklage in eine besonders schmale Ausnehmung geführt werden, beispielsweise unter eine Motorhaube oder in eine speziell geformte A-Säule eines Kraftfahrzeugs. Ferner können verschleiß- und fehleranfällige Bauteile, insbesondere Lagerbauteile, zumindest weitgehend reduziert werden.

Unter gelenkfrei verbunden soll in diesem Zusammenhang verstanden werden, dass der Wischarm und das Wischblatt ohne eine materiell ausgeführte Schwenkachse verbunden sind, um die der Wischarm und das Wischblatt relativ zueinander schwenkbar wären. Bauteile, die infolge einer Materialverformung, insbesondere infolge einer elastischen Verformung, eine Relativbewegung zwischen dem Wischarm und dem Wischblatt ermöglichen, sollen in diesem Zusammenhang nicht als Gelenk angesehen werden und sollen insbesondere vom Schutzbereich mit umfasst sein, wie beispielsweise Filmscharniere, federelastische Teilstücke usw.

Ist der Wischarm und das Wischblatt über wenigstens ein federelastisches Verbindungsteil verbunden, kann vorteilhaft ein Ausgleich einer Hubbewegung bzw. einer Relativbewegung zwischen dem Wischarm und dem Wischblatt während des Betriebs sicher gestellt werden. Grundsätzlich ist jedoch auch denkbar, dass der Wischarm und das Wischblatt über ein im Wesentlichen starres Verbindungsteil miteinander verbunden sind. Ein Ausgleich von Relativbewegungen zwischen dem Wischarm und dem Wischblatt könnte dabei durch den Wischarm und/oder durch das Wischblatt selbst erreicht werden.

In einer weiteren Ausgestaltung der Erfindung wird vorgeschlagen, dass das Wischblatt ein gelenkfrei mit dem Wischarm verbundenes, federelastisches Wischleistenträgerelement aufweist, an dessen konkaven Seite sich im montierten Zustand eine Wischlippe einer Wischleiste erstreckt. Derartige, so genannte gelenkfreie Wischblätter können besonders flachbauend ausgeführt und es kann ein insgesamt besonders flachbauender Wischhebel erreicht werden. Zudem kann die Bauteileanzahl gegenüber Bügelwischblättern, die grundsätzlich ebenfalls in einem erfindungsgemäßen Wischhebel integrierbar sind, erheblich reduziert werden.

Zudem wird vorgeschlagen, dass der Wischarm wenigstens ein federelastisches Trägerelement aufweist. Auf ein Gelenk im Wischarm kann verzichtet und es können zusätzliche Bauteile eingespart und die Gesamtbauhöhe des Wischhebels kann weiter reduziert werden. Ferner können in einer Kombination mit einem bügellosen Wischblatt der Wischarm und das Wischblatt vorteilhaft auf zumindest im Wesentlichen gleichen Produktionsmaschinen kostengünstig hergestellt werden.

Das Verbindungsteil kann vorteilhaft mit wenigstens einem federelastischen Trägerelement, wie einem Wischleistenträgerelement und/oder einem Trägerelement des Wischarms einstückig ausgeführt sein, wodurch zusätzliche Bauteile, Montageaufwand und Kosten eingespart werden können.

Da der Wischarm und das Wischblatt zumindest teilweise einstückig ausgeführt sind, können wiederum zusätzliche Bauteile eingespart und es kann eine besonders kostengünstige Herstellung erreicht werden, und zwar insbesondere, wenn der Wischarm und das Wischblatt aus einem gemeinsamen Stanz-Biegeteil gebildet sind. Ferner kann eine besonders harmonische Biegelinie des Wischhebels erzielt und Schwachstellen können einfach vermieden werden.

In einer weiteren Ausgestaltung der Erfindung wird vorgeschlagen, dass das Wischblatt über sein äußeres Wischblattende mit dem Wischarm verbunden ist bzw. eine Auflagekrafteinleitungsstelle an seinem äußeren Wischblattende aufweist. Es kann ein langer Wischarm erzielt und insbesondere bei einer Ausgestaltung des Wischarms mit einem federelastischen Trägerelement eine vorteilhaft große Länge erreicht werden, über die eine Relativbewegung zwischen dem Wischarm und dem Wischblatt ausgeglichen und eine große Relativbewegung des Wischblatts im Wesentlichen senkrecht zur Windschutzscheibe ermöglicht werden kann, beispielsweise zur komfortablen Reinigung der Windschutzscheibe. Ferner kann ein besonders kleiner Innenkreis des Wischblatts bzw. ein kleiner Abstand eines inneren Wischblattendes zu einer Antriebswelle erreicht werden, über die der Wischhebel antreibbar ist.

Ist das Wischblatt über sein inneres Wischblattende mit dem Wischarm verbunden bzw. weist das Wischblatt eine Auflagekrafteinleitungsstelle an seinem inneren Wischblattende auf, kann ein vibrationsunempfindlicher Wischhebel erreicht und es kann eine Konstruktion mit geringem Materialeinsatz erzielt werden.

Ist das Wischblatt über einen Bereich zwischen seinen Wischblattenden und insbesondere über seinen Längsmittelabschnitt mit dem Wischarm verbunden bzw. weist das Wischblatt eine Auflagekrafteinleitungsstelle in seinem Längsmittelabschnitt auf, kann eine besonders vorteilhafte, insbesondere zumindest weitgehend symmetrische Kräfteverteilung am Wischblatt erzielt werden.

Anstatt alternativ können die vorgeschlagenen Verbindungsstellen bzw. Auflagekrafteinleitungsstellen, und zwar am äußeren Wischblattende, am inneren Wischblattende und in einem Bereich zwischen den Wischblattenden, auch beliebig kombiniert werden.

Der Wischarm ist über wenigstens ein Querstück mit dem Wischblatt verbunden, wodurch einfach, mit geringem Materialeinsatz ein vorteilhafter Abstand zwischen dem Wischblatt und dem Wischarm erreicht werden kann, über den Relativbewegungen zwischen den beiden Bauteilen ausgleichbar sind, beispielsweise über eine elastische Verformung. Zudem kann durch das Querstück vorteilhaft ein sich während des Betriebs ergebendes Wischfeld eingestellt werden. Der Einsatz eines Querstücks eignet sich besonders für eine Verbindung des Wischblatts an seinem inneren Wischblattende oder in seinem Längsmittelabschnitt mit dem Wischarm, kann jedoch auch für eine Verbindung des Wischblatts an seinem äußeren Wischblattende mit dem Wischarm verwendet werden.

Ferner kann ein vorteilhafter Abstand zwischen dem Wischblatt und dem Wischarm erreicht werden, über den wiederum ein Bewegungsausgleich realisiert werden kann, indem der Wischarm und das Wischblatt über wenigstens eine Umlenkung mit einem Winkel größer als 90° verbunden sind.

Weist das Wischblatt wenigstens eine schlitzförmige Ausnehmung zur Aufnahme einer Wischleiste auf, können bewährte Wischleisten einfach am Wischblatt montiert werden. Grundsätzlich ist jedoch auch der Einsatz geklebter Wischleisten oder von als Hohlprofil ausgebildeten Wischleisten denkbar.

Der Wischarm und das Wischblatt werden vorteilhaft aus einem federelastischen Stahlblech gebildet, wodurch auf für bügellose Wischblätter bewährte Fertigungsanlagen zurückgegriffen werden kann. Es sind jedoch auch andere, dem Fachmann als sinnvoll erscheinende Materialien denkbar, wie beispielsweise faserverstärkte Kunststoffe usw.

Um zumindest in einzelnen Bereichen eine erhöhte Steifigkeit zu erreichen, können zudem Sicken, U-Profile usw. vorgesehen werden, beispielsweise indem diese an den Wischarm oder an das Wischblatt angeformt oder indem zusätzliche Bauteile befestigt werden.

Ferner ist denkbar, am Wischblatt und/oder am Wischarm einen Windabweiser anzuordnen, der von einem zusätzlichen Bauteil gebildet sein kann, beispielsweise von einem Kunststoffbauteil, oder zumindest teilweise einstückig an das Wischblatt und/oder an den Wischarm angeformt sein kann, beispielsweise indem dieser einstückig an ein Stanz-Biegeblechteil angeformt ist.

Der erfindungsgemäße Wischhebel kann als vollwertiger Wischhebel sowohl für eine Front- als auch für eine Heckscheibe angewendet ausgeführt werden oder kann als so genannter Transportwischhebel ausgeführt werden, der vor einer Auslieferung an einen Endkunden durch einen anderen Wischhebel ersetzt wird.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Wischllebel mit einer Auflagekrafteinleitungsstelle an einem äußeren Wischblattende in einer Ansicht von unten vor einem Biegeprozess,
- Fig. 2: den Wischhebel aus Fig. 1 nach einem ersten Biegevorgang,
- Fig. 3: den Wischhebel aus Fig. 1 nach einem zweiten Biegevorgang in einer Seitenansicht,
- Fig. 4: einen alternativen Wischhebel zu Fig. 1 mit einer Auflagekrafteinleitungsstelle an einem inneren Wischblattende in einer Ansicht von unten vor einem Biegeprozess,
- Fig. 5: den Wischhebel aus Fig. 4 nach dem Biegeprozess in einer Seitenansicht,
- Fig. 6: einen alternativen Wischhebel zu Fig. 4 mit einem von einem Querstück gebildeten Verbindungsteil in einer Ansicht von unten,
- Fig. 7: den Wischhebel aus Fig. 6 in einer Seitenansicht,
- Fig. 8: eine Ansicht in Richtung VIII in Fig. 7,
- Fig. 9: einen alternativen Wischhebel zu Fig. 6 vor einem Biegeprozess zur Anformung einer 180°-Umlenkung von unten,
- Fig. 10: den Wischhebel aus Fig. 9 nach dem Biegeprozess,
- Fig. 11: den Wischhebel aus Fig. 10 in einer Seitenansicht,
- Fig. 12: eine Ansicht in Richtung XII in Fig. 11,
- Fig. 13: einen zu Fig. 1 alternativen Wischllebel mit einer Auflagekrafteinleitungsstelle an einem Längsrnittelabsclmitt eines Wischblatts in einer Ansicht von unten,
- Fig. 14: den Wischhebel aus Fig. 13 in einer Seitenansicht
- Fig. 15 5: einen zu Fig. 13 alternativen Wischhebel mit einem einzelnen Querstück in einer Ansicht von unten,
- Fig. 16: den Wischhebel aus Fig. 15 in einer Seitenansicht,

- Fig. 17: einen zu Fig. 15 alternativen Wischhebel vor einem Biegeprozess zur Anformung einer 180°-Umlenkung,
- Fig. 18: den Wischhebel aus Fig. 17 nach dem Biegeprozess,
- Fig. 19: den Wischhebel aus Fig. 18 in einer Seitenansicht,
- Fig. 20: eine Ansicht in Richtung XX in Fig. 19,
- Fig. 21: einen alternativen Wischhebel zu Fig. 13 vor einer Verbindung eines Wischarms und eines Wischblatts,
- Fig. 22: den Wischhebel aus Fig. 21 nach der Verbindung des Wischarms und des Wischblatts und
- Fig. 23: den Wischhebel aus Fig. 22 in einer Seitenansicht.

### Beschreibung der Ausführungsbeispiele

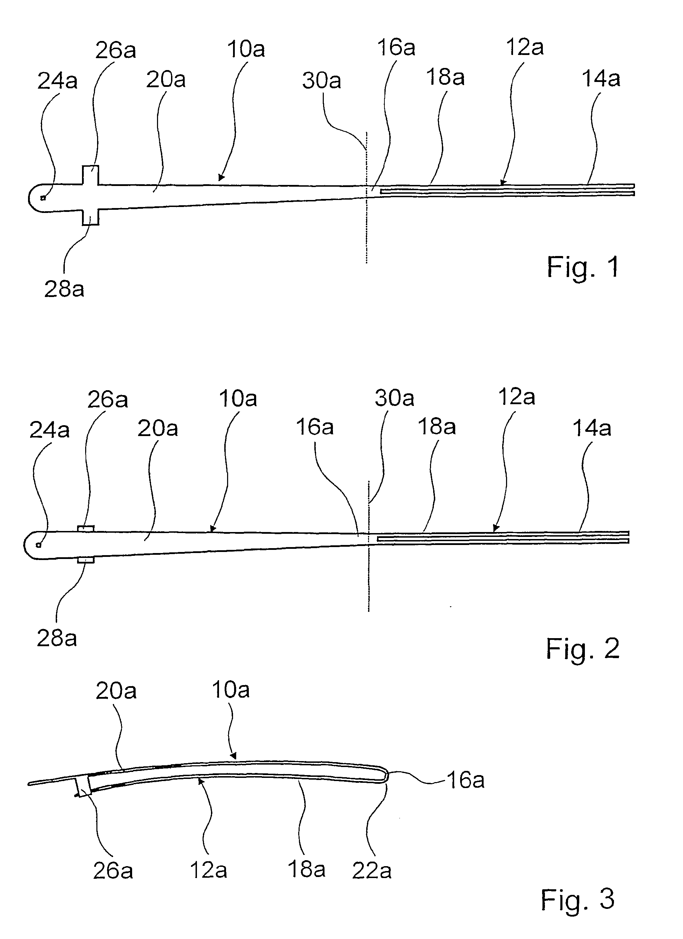

In den Fig. 1 bis 3 ist ein Wischhebel mit einem Wischarm 10a und einem Wischblatt 12a in verschiedenen Fertigungsstufen dargestellt, wobei der Wischarm 10a und das Wischblatt 12a erfindungsgemäß gelenkfrei durch ein federelastisches Verbindungsteil 16a verbunden sind. Der Wischarm 10a, das Verbindungsteil 16a und das Wischblatt 12a sind einstückig ausgeführt und werden von einem gemeinsamen, langgestreckten Stanz-Biegeteil aus einem federelastischen Stahlblech gebildet. Anstatt einer einstückigen Ausführung wäre auch eine mehrteilige Ausführung denkbar, wobei die Bauteile im fertiggestellten Zustand durch verschiedene, dem Fachmann als sinnvoll erscheinende stoffschlüssige, forinschlüssige und/oder kraftschlüssige Verbindungen verbunden sein können, beispielsweise durch eine Nietverbindung, eine Klemmverbindung, eine Schraubverbindung, eine Schweißverbindung und/oder eine Klebeverbindung usw. Bei einer einstückigen Ausführung wird im Wesentlichen der Bereich als Wischblatt 12a angesehen, in dem sich im fertig montierten Zustand eine Wischleiste erstreckt.

Das Wischblatt 12a weist ein gelenkfrei mit dem Wischarm 10a verbundenes, federelastisches, bogenförmiges Wischleistenträgerelement 18a auf, an dessen konkaven Seite sich im montierten Zustand eine Wischlippe einer Wischleiste erstreckt (Fig. 3). Das Wischleistenträgerelement 18a weist eine schlitzförmige, sich in Längsrichtung erstreckende Ausnehmung 14a zur Aufnahme der Wischleiste auf. Die Ausnelunung 14a ist zu einem freien Ende des Wischleistenträgerelements 18a hin offen ausgeführt. Die Wischleiste kann dadurch vorteilhaft über das freie Ende des Wischleistenträgerelements 18a eingeführt werden. Die Ausnehmung 14a könnte jedoch auch zum freien Ende hin geschlossen ausgeführt sein.

Der Wischarm 10a weist ein federelastisches Trägerelement 20a auf, das an seinem freien Ende eine Ausnehmung 24a zur Kopplung an eine Antriebswelle aufweist. Vor einem sich an einen Stanzprozess anschließenden Biegeprozess ist der Wischhebel im Wesentlichen eben ausgeführt und weist ausgehend von der Ausnehmung 24a kurz nach derselben in Richtung zum Wischblatt 12a zwei sich quer zur Längsrichtung erstreckende, an den Wischarm 10a einstückig angeformte Laschen 26a, 28a auf (Fig. 1).

Im Biegeprozess werden die Laschen 26a, 28a um 90° in Richtung zu einer Unterseite des Wischhebels umgebogen (Fig. 2). Zudem wird das freie Ende des Wischblatts 12a in Richtung dem freien Ende des Wischarms 10a gebogen, und zwar um ca. 180° um eine senkrecht zur Längserstreckung und parallel zu einer Unterseite des Wischhebels verlaufende Biegeachse 30a im Bereich des Verbindungsteils 16a, das im aufgebogenen Zustand betrachtet, ausgehend von der Ausnehmung 24a in Richtung Wischblatt 12a kurz nach einer Längsmitte angeordnet ist.

Es entsteht im Bereich des Verbindungsteils 16a im Wesentlichen eine 180°-Umlenkung 22a, über die der Wischarm 10a und das Wischblatt 12a miteinander verbunden sind (Fig. 3). Ferner werden an den Wischarm 10a und an das Wischblatt 12a leichte Längskrümmungen angeformt. Zusätzlich oder alternativ zum Wischblatt 12a könnte auch der Wischarm 10a um die Biegeachse 30a gebogen werden. Das freie Ende des Wischblatts 12a kommt im Bereich der Laschen 26a, 28a zum Liegen, die eine Wischblattführung bilden. Über die die Wischblattrührung bildende Laschen 26a, 28a können ohne zusätzliche Bauteile Vibrationen des Wischhebels und insbesondere des Wischblatts zumindest reduziert werden.

Das Wischblatt 12a ist über sein äußeres Wischblattende und über das Verbindungsteil 16a mit dem Wischarm 10a verbunden. Im Betrieb wird im Bereich eines Außenkreises des Wischblatts 12a bzw. wird vom Wischarm 10a über das Verbindungsteil 16a und über das äußere Wischblattende eine Auflagekraft auf das Wischblatt 12a übertragen.

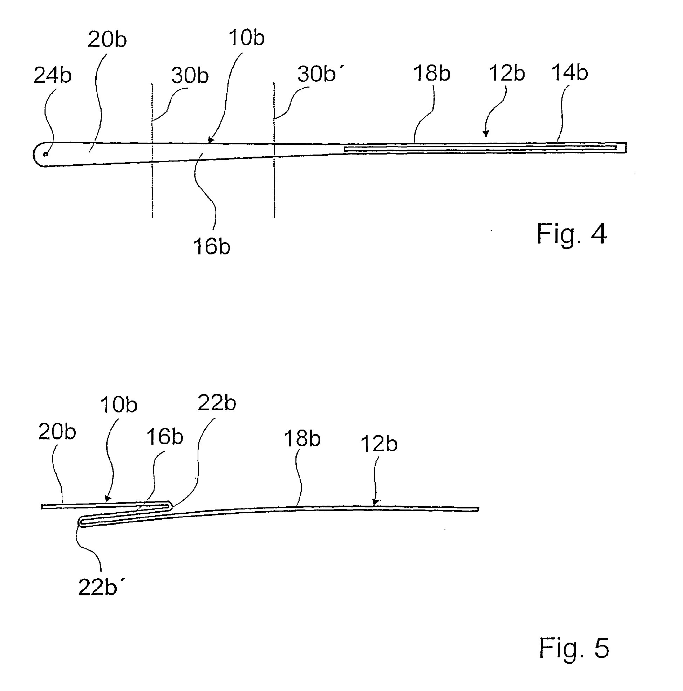

In den Fig. 4 und 5 ist ein alternativer Wischhebel dargestellt. Bei den Ausführungsbeispielen sind in der Beschreibung im Wesentlichen gleiche Bauteile und Merkmale grundsätzlich mit den gleichen Bezugszeichen beziffert, wobei zur Unterscheidung der Ausführungsbeispiele die Buchstaben "a" - "h" hinzugefügt sind. Ferner kam bezüglich gleichbleibender Merkmale und Funktionen auf die Beschreibung des Ausführungsbeispiels in den Fig. 1 bis 3 verwiesen werden. Die nachfolgende Beschreibung beschränkt sich im Wesentlichen auf die Unterschiede zum Ausführungsbeispiel in den Fig. 1 bis 3.

Der Wischhebel umfasst einen Wischarm 10b und ein Wischblatt 12b, die über ein federelastisches Verbindungsteil 16b gelenkfrei verbunden sind. Der Wischarm 10b, das Verbindungsteil 16b und das Wischblatt 12b sind einstückig ausgeführt und sind von einem gemeinsamen, langgestreckten Stanz-Biegeteil aus einem federelastischen Stahlblech gebildet.

Vor einem sich an einen Stanzprozess anschließenden Biegeprozess ist der Wischhebel im Wesentlichen eben ausgeführt (Fig. 4). Im Biegeprozess wird in einem ersten Schritt das freie Ende des Wischblatts 12b in Richtung dem freien Ende des Wischarms 10b gebogen, und zwar um ca. 180° um eine erste, senkrecht zur Längserstreckung und parallel zu einer Unterseite des Wischhebels verlaufende erste Biegeachse 30b im Bereich des Verbindungsteils 16b. In einem zweiten Schritt wird das freie Ende des Wischblatts 12b entgegengesetzt zur ersten Biegerichtung um ca. 180° um eine zweite Biegeachse 30b' im Bereich des Verbindungsteils 16b gebogen, die parallel zur ersten Biegeachse 30b ausgerichtet und im aufgebogenen Zustand betrachtet, ausgehend von einer Ausnehmung 24b im Wischarm 10b zur Anlenkung desselben an eine Antriebswelle, in Richtung zum Wischblatt 12b nach der ersten Biegeachse 30b angeordnet ist. Im Bereich des Verbindungsteils 16b entsteht im Wesentlichen eine S-förmige Ausgestaltung mit zwei im Wesentlichen 180°-Umlenkungen 22b, 22b', über die der Wischarm 10b und das Wischblatt 12b miteinander verbunden sind (Fig. 5). Durch die S-förmige Ausgestaltung entsteht ein vorteilhafter Bereich, über den eine Relativbewegung zwischen dem Wischarm 10b und dem Wischblatt 12b ausgeglichen werden kann. Zusätzlich oder alternativ zum Wischblatt 12b könnte auch der Wischarm 10b um die Biegeachsen 30b, 30b' gebogen werden.

Das Wischblatt 12b ist über sein inneres Wischblattende und über das Verbindungsteil 16b mit dem Wischarm 10b verbunden. Im Betrieb wird im Bereich eines Innenkreises des Wischblatts 12b bzw. wird vom Wischarm 10b über das Verbindungsteil 16b und über das innere Wischblattende eine Auflagekraft auf das Wischblatt 12b übertragen.
Zur Befestigung einer Wischleiste am Wischblatt 12b ist in einem federelastischen, bogenförmigen Wischleistenträgerelement 18b des Wischblatts 12b eine schlitzförmige Ausnehmung 14b eingebracht, die im Bereich des freien Endes des Wischblatts 12b geschlossen ausgeführt ist.

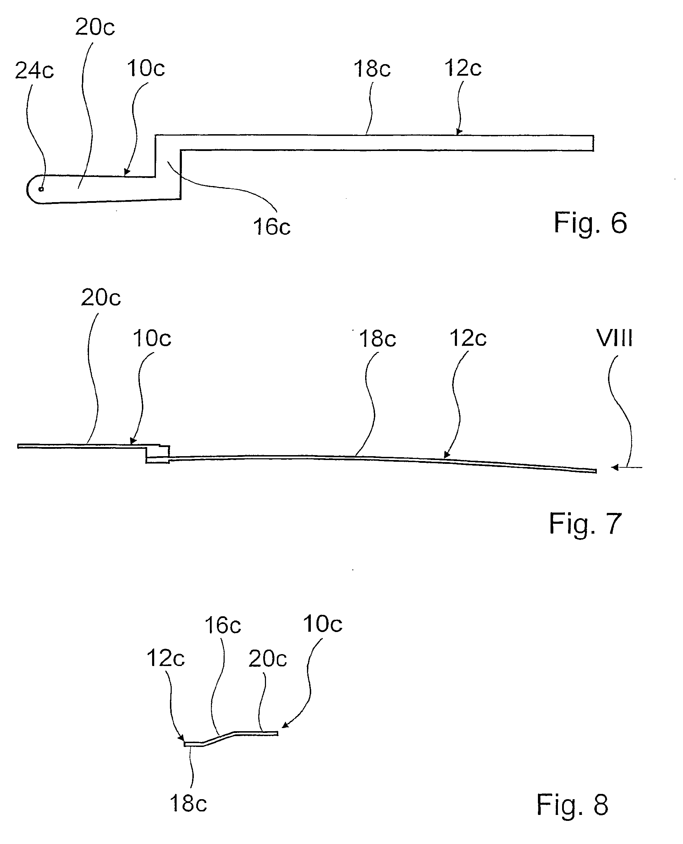

In den Fig. 6 bis 8 ist ein alternativer Wischhebel zu dem in den Fig. 4 und 5 dargestellt. Der Wischhebel weist ein von einem Querstück gebildetes Verbindungsteil 16c auf, das quer zur Längserstreckung des Wischhebels ausgerichtet ist, und über das ein Wischarm 10c und ein Wischblatt 12c des Wischhebels gelenkfrei verbunden sind. Der Wischarm 10c, das Verbindungsteil 16c und das Wischblatt 12c sind einstückig ausgeführt und sind von einem gemeinsamen, langgestreckten Stanz-Biegeteil aus einem federelastischen Stahlblech gebildet.

Das Wischblatt 12c ist über sein inneres Wischblattende und über das Verbindungsteil 16c mit dem Wischarm 10c verbunden. Um senkrecht zu einer zu wischenden Windschutzscheibe einen Höhenversatz zwischen dem Wischarm 10c und dem Wischblatt 12c zu erreichen, ist das Verbindungsteil 16c abgewinkelt ausgeführt (Fig. 7 und 8).

Auf ein ganzflächig bzw. ohne Ausnehmung ausgeführtes Wischleistenträgerelement 18c des Wischblatts 12c kann eine als Hohlprofil ausgefülu-te Wischleiste aufgeschoben oder es kann eine Wischleiste aufgeklebt werden.

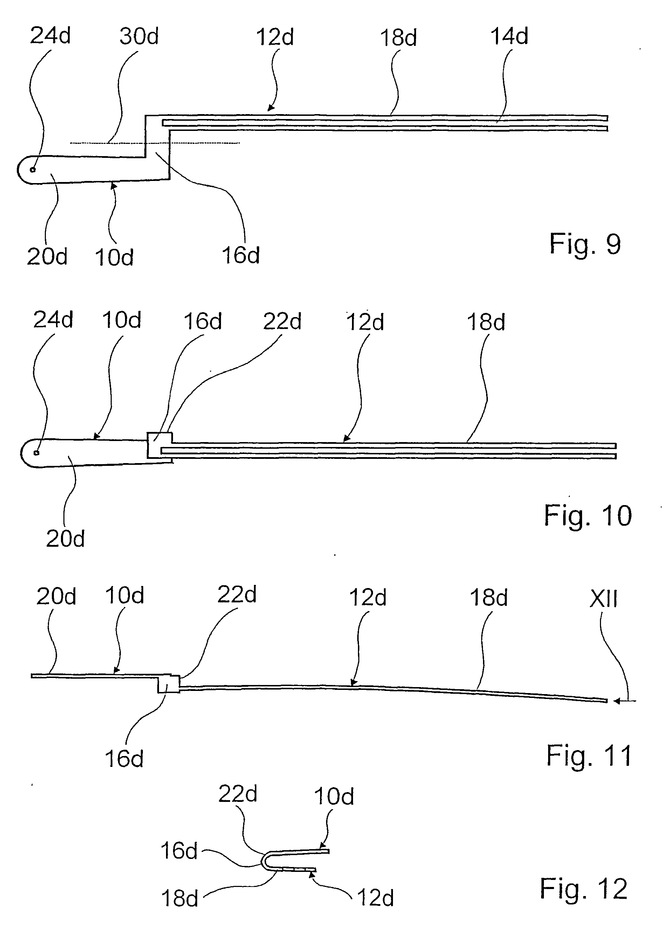

In Fig. 9 bis 12 ist ein alternativer Wischhebel zu dem in den Fig. 6 bis 8 dargestellt. Der Wischhebel weist ein von einem Querstück gebildetes Verbindungsteil 16d auf, das quer zur Längserstreckung des Wischhebels ausgerichtet ist und über das ein Wischarm 10d und ein Wischblatt 12d des Wischhebels gelenkfrei verbunden sind. Der Wischarm 10d, das Verbindungsteil 16d und das Wischblatt 12d sind einstückig ausgeführt und sind von einem gemeinsamen, langgestreckten Stanz-Biegeteil aus einem federelastischen Stahlblech gebildet.

Vor einem sich an einen Stanzprozess anschließenden Biegeprozess ist der Wischhebel im Wesentlichen eben ausgeführt (Fig. 9). Im Biegeprozess wird das Wischblatt 12d in Richtung zum Wischarm 10d gebogen, und zwar um ca. 180° um eine parallel zur Längserstreckung des Wischblatts 12d verlaufende Biegeachse 30d im Bereich des Verbindungsteils 16d, so dass der Wischarm 10d und das Wischblatt 12d fluchten.

Es entsteht im Bereich des Verbindungsteils 16d im Wesentlichen eine 180°-Umlenkung 22d, über die der Wischarm 10d und das Wischblatt 12a miteinander verbunden sind (Fig. 10, 11 und 12).

Zusätzlich oder alternativ zum Wischblatt 12d könnte auch der Wischarm 10d um die Biegeachse 30d gebogen werden.

Das Wischblatt 12d ist über sein inneres Wischblattende und über das Verbindungsteil 16d mit dem Wischarm 10d verbunden.
Im Betrieb wird im Bereich eines Innenkreises des Wischblatts 12d bzw. wird vom Wischarm 10d über das Verbindungsteil 16d und über das innere Wischblattende eine Auflagekraft auf das Wischblatt 12d übertragen.

Zur Befestigung einer Wischleiste am Wischblatt 12d ist in einem federelastischen, bogenförmigen Wischleistenträgerelement 18d des Wischblatts 12d eine schlitzförmige Ausnehmung 14d eingebracht, die im Bereich des freien Endes des Wischblatts 12d offen ausgeführt ist.

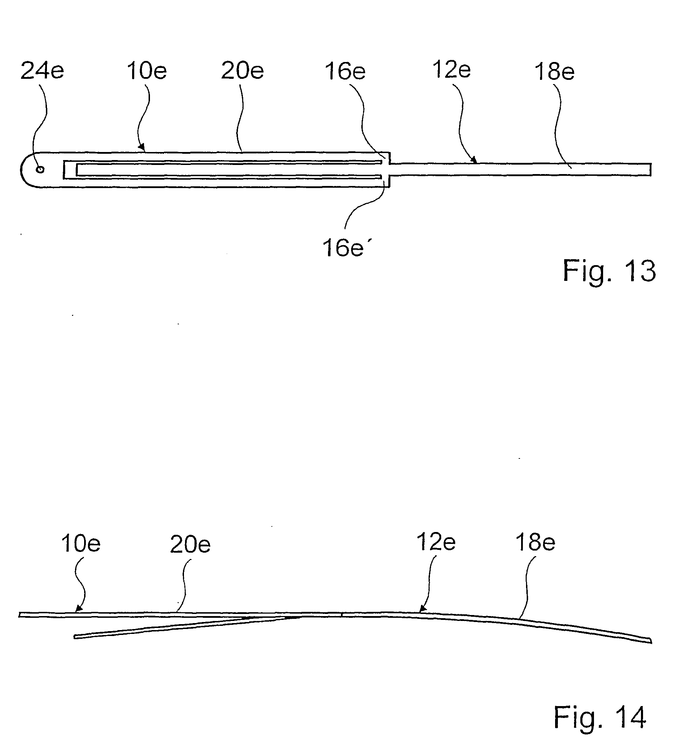

In den Fig. 13 und 14 ist ein alternativer Wischhebel zu dem in den Fig. 1 bis 3 dargestellt. Der Wischhebel weist von Querstücken gebildete Verbindungsteile 16e, 16e' auf, die quer zur Längserstreckung des Wischhebels ausgerichtet sind, und über die ein Wischarm 10e und ein Wischblatt 12e des Wischhebels gelenkfrei verbunden sind. Der Wischarm 10e, die Verbindungsteile 16e, 16e' und das Wischblatt 12e sind einstückig ausgeführt und sind von einem gemeinsamen, langgestreckten Stanz-Biegeteil aus einem federelastischen Stahlblech gebildet. Der Wischarm 10e und das Wischblatt 12e weisen im ungebogenen Zustand betrachtet eine gemeinsame Längsachse auf, wobei ein Wischblattteil von einem freigeschnittenen Teil eines ebenfalls den Wischarm 10e bildenden Blechabschnitts gebildet ist.

Das Wischblatt 12e ist über seinen Längsmittelabschnitt und über die Verbindungsteile 16e, 16e' mit dem Wischarm 10e verbunden. Im Betrieb wird im Bereich eines Mittelkreises des Wischblatts 12e bzw. wird vom Wischarm 10e über die Verbindungsteile 16e, 16e' und über den Längsmittelabschnitt des Wischblatts 12e eine Auflagekraft auf das Wischblatt 12d übertragen.

Auf ein ganzflächig bzw. ohne Ausnehmung ausgeführtes Wischleistenträgerelement 18e des Wischblatts 12e kann eine als Hohlprofil ausgeführte Wischleiste aufgeschoben oder es kann eine Wischleiste aufgeklebt werden. Das Wischleistenträgerelement 18e könnte jedoch auch mit einer sich über dessen Länge erstreckenden, schlitzförmigen, zu einem Ende oder zu beiden Enden hin offenen Ausnehmung ausgeführt sein, in die eine Wischleiste eingeschoben werden kann.

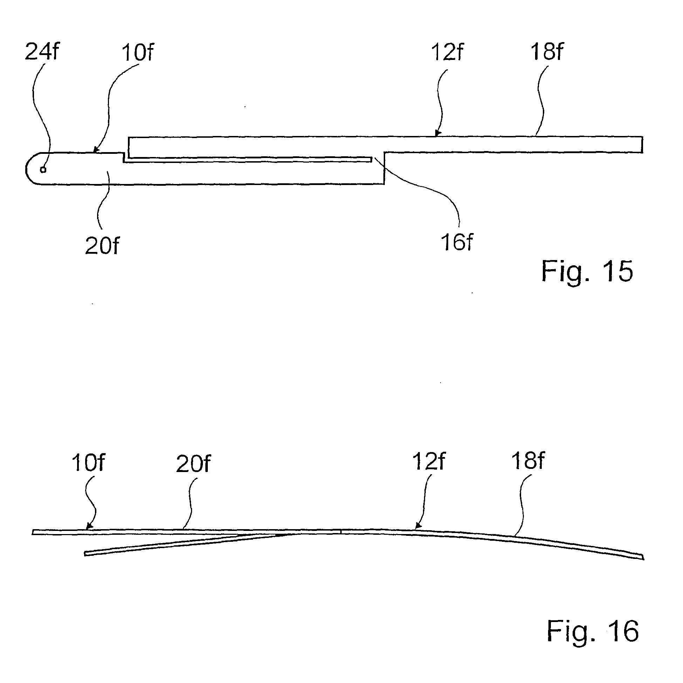

In Fig. 15 und 16 ist ein zu dem in den Fig. 13 und 14 alternativer Wischhebel dargestellt, der anstatt zwei Verbindungsteile 16e, 16e' nur ein von einem Querstück gebildetes Verbindungsteil 16f aufweist, über das ein Wischarm 10f und ein Wischblatt 12f gelenkfrei verbunden sind.

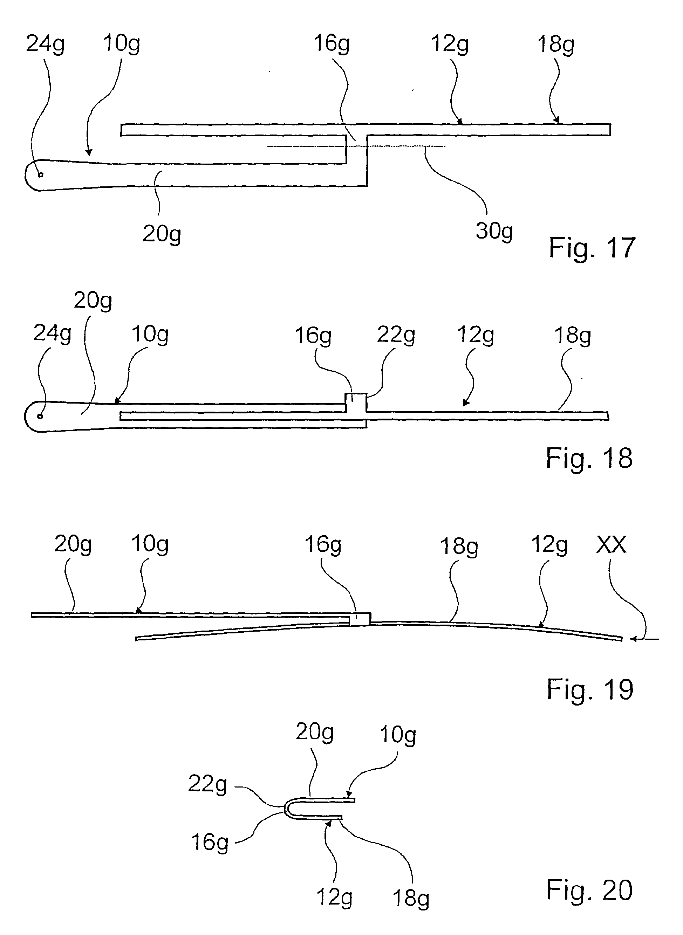

In den Fig. 17 bis 20 ist ein alternativer Wischhebel zu dem in den Fig. 15 und 16 dargestellt. Der Wischhebel weist ein von einem Querstück gebildetes Verbindungsteil 16g auf, das quer zur Längserstreckung des Wischhebels ausgerichtet ist, und über das ein Wischarm 10g und ein Wischblatt 12g des Wischhebels gelenkfrei verbunden sind. Der Wischarm 10g, das Verbindungsteil 16g und das Wischblatt 12g sind einstückig ausgeführt und sind von einem gemeinsamen, langgestreckten Stanz-Biegeteil aus einem federelastischen Stahlblech gebildet.

Vor einem sich an einen Stanzprozess anschließenden Biegeprozess ist der Wischhebel im Wesentlichen eben ausgeführt (Fig. 17). Im Biegeprozess wird das Wischblatt 12g in Richtung zum Wischarm 10g gebogen, und zwar um ca. 180° um eine parallel zur Längserstreckung des Wischblatts 12g verlaufende Biegeachse 30g im Bereich des Verbindungsteils 16g, so dass das Wischblatt 12g und der Wischarm 10g im Wesentlichen fluchten.
Es entsteht im Bereich des Verbindungsteils 16g im Wesentlichen eine 180°-Umlenkung 22g, über die der Wischarm 10g und das Wischblatt 12g miteinander verbunden sind (Fig. 18, 19 und 20). Zusätzlich oder alternativ zum Wischblatt 12g könnte auch der Wischarm 10g um die Biegeachse 30g gebogen werden.

Das Wischblatt 12g ist über seinen Längsmittelabschnitt und über das Verbindungsteil 16g mit dem Wischarm 10g verbunden. Im Betrieb wird im Bereich eines Mittelkreises des Wischblatts 12g bzw. wird vom Wischarm 10g über das Verbindungsteil 16g und über den Längsmittelabschnitt des Wischblatts 12g eine Auflagekraft auf das Wischblatt 12g übertragen.

Auf ein ganzflächig bzw. ohne Ausnehmung ausgeführtes Wischleistenträgerelement 18g des Wischblatts 12g kann eine als Hohlprofil ausgeführte Wischleiste aufgeschoben oder es kann eine Wischleiste aufgeklebt werden. Das Wischleistenträgerelement 18g könnte jedoch auch mit einer sich über dessen Länge erstreckenden, schlitzförmigen, zu einem Ende oder zu beiden Enden hin geschlossenen Ausnehmung ausgeführt sein, in die eine Wischleiste eingeschoben werden kann.

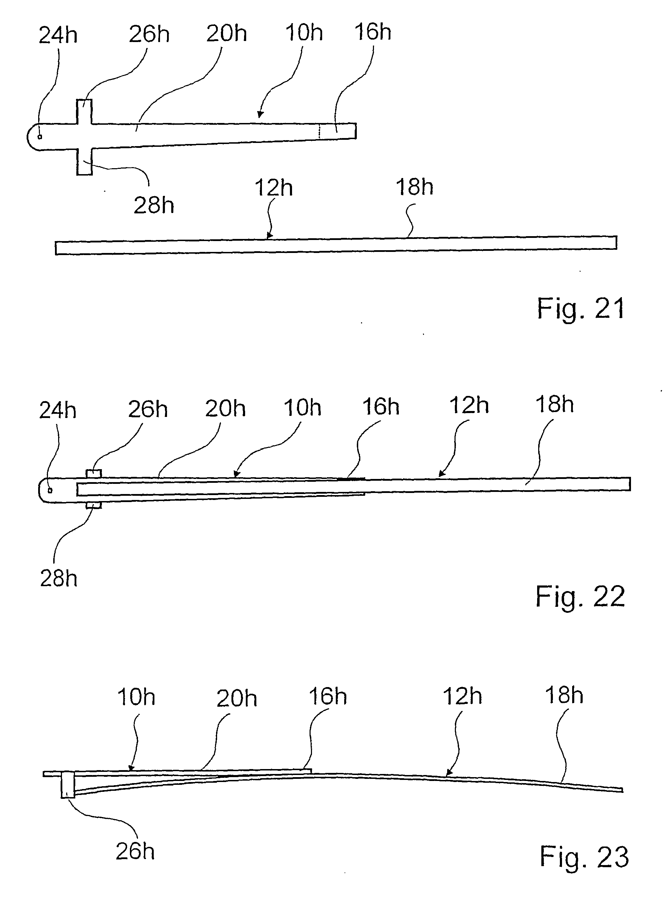

In den Fig. 21 bis 23 ist ein alternativer Wischhebel mit einem Wischarm 10h und einem Wischblatt 12h in verschiedenen Fertigungsstufen dargestellt, wobei der Wischarm 10h und das Wischblatt 12h fertiggestellt erfindungsgemäß gelenkfrei, durch ein federelastisches Verbindungsteil 16h verbunden sind (Fig. 23). Der Wischarm 10h und das Verbindungsteil 16h sind einstückig ausgeführt und werden von einem gemeinsamen, langgestreckten Stanz-Biegeteil aus einem federelastischen Stahlblech gebildet. Der Wischarm 10h weist an einem Ende eine Ausnehmung 24h zur Anlenkung an eine Antriebswelle auf, während an einem zweiten Ende des Wischarms 10h das Verbindungsteil 16g angeordnet ist. Das Wischblatt 12h wird von einem zum Wischarm 10h und Verbindungsteil 16h getrennt ausgebildeten Stanz-Biegeteil gebildet und weist eine geringere Materialstärke auf als der Wischarm 10h und das Verbindungsteil 16h.

Das Wischblatt 12h wird in einer Fertigungsstufe mit seinem Längsmittelabschnitt mit dem Verbindungsteil 16h verschweißt (Fig. 22 und 23). Ferner werden in einem Biegeprozess an den Wischarm 10h angeformte Laschen 26h, 28h um 90° in Richtung zu einer Unterseite des Wischhebels umgebogen, die eine Wischblattführung am Innenkreis des Wischblatts 12h bilden.

Das Wischblatt 12h ist über seinen Längsmittelabschnitt und über das Verbindungsteil 16h mit dem Wischarm 10h verbunden. Im Betrieb wird im Bereich eines Mittelkreises des Wischblatts 12h bzw. wird vom Wischarm 10h über das Verbindungsteil 16h und über den Längsmittelabschnitt des Wischblatts 12h eine Auflagekraft auf das Wischblatt 12h übertragen.

Auf ein ganzflächig bzw. ohne Ausnehmung ausgeführtes Wischleistenträgerelement 18h des Wischblatts 12h kann eine als Hohlprofil ausgeführte Wischleiste aufgeschoben oder es kann eine Wischleiste aufgeklebt werden.

Das Wischleistenträgerelement 18h könnte jedoch auch mit einer sich über dessen Länge erstreckenden, schlitzförmigen, zu einem Ende oder zu beiden Enden hin geschlossenen Ausnehmung ausgeführt sein, in die eine Wischleiste eingeschoben werden kann.

### Bezugszeichen

- 10: Wischarm
- 12: Wischblatt
- 14: Ausnehmung
- 16: Verbindungsteil
- 18: Wischleistenträgerelement
- 20: Trägerelement
- 22: Umlenkung
- 24: Ausnehmung
- 26: Lasche
- 28: Lasche
- 30: Biegeachse

## Patentansprüche

1. Wischhebel mit einem Wischarm (10a - 10h) und einem Wischblatt (12a - 12h), der mit dem Wischblatt (12a - 12h) gelenkfrei verbunden ist, wobei der Wischarm (10a - 10g) und das Wischblatt (12a - 12g) zumindest teilweise einstückig ausgeführt sind **dadurch gekennzeichnet, dass** das Wischblatt (12a - 12h) zwischen seinen Wischblattenden mit dem Wischarm (10e - 10h) über wenigstens ein federelastisches Querstück mit dem Wischblatt (12c - 12g) verbunden ist.

2. Wischhebel nach Anspruch 1, **dadurch gekennzeichnet, dass** der Wischarm (10a-10h) und das Wischblatt (12a - 12h) über wenigstens ein federelastisches Verbindungsteil (16a - 16h) verbunden sind.

3. Wischhebel nach Anspruch 1 oder 2, **dadurch gekennzeichnet, dass** das Wischblatt (12a - 12h) ein gelenkfrei mit dem Wischarm (10a - 10h) verbundenes, federelastisches Wischleistenträgerelement (18a - 18h) aufweist, an dessen konkaven Seite sich im montierten Zustand eine Wischlippe einer Wischleiste erstreckt.

4. Wischhebel nach einem der vorhergehenden Ansprüche, **dadurch gekennzeichnet, dass** der Wischarm (10a - 10h) wenigstens ein federelastisches Trägerelement (20a - 20h) aufweist.

5. Wischhebel zumindest nach Anspruch 2, **dadurch gekennzeichnet, dass** das Verbindungsteil (16a - 16h) einstückig mit wenigstens einem federelastischen Trägerelement (18a - 18g, 20a - 20h) ausgeführt ist.

6. Wischhebel nach Anspruch 6, **dadurch gekennzeichnet, dass** der Wischarm (10a - 10g) und das Wischblatt (12a - 12g) aus einem gemeinsamen Stanz-Biegeteil gebildet sind.

7. Wischhebel nach einem den vorhergehenden Ansprüche, **dadurch gekennzeichnet, dass** das Wischblatt (12a) auch über sein äußeres Wischblattende mit dem Wischarm (10a) verbunden ist.

8. Wischhebel nach einem der vorhergehenden Ansprüche, **dadurch gekennzeichnet, dass** das Wischblatt (12b - 12d) auch über sein inneres Wischblattende mit dem Wischarm (10b - 10d) verbunden ist.

9. Wischhebel nach einem der vorhergehenden Ansprüche, **dadurch gekennzeichnet, dass** der Wischarm (10a, lOb, 10d, 10g) und das Wischblatt (12a, 12b, 12d, 12g) über wenigstens eine Umlenkung (22a, 22b, 22d, 22g) mit einem Winkel größer als 90° verbunden sind.

10. Wischhebel nach einem der vorhergehenden Ansprüche, **dadurch gekennzeichnet, dass** das Wischblatt (12a, 12b, 12d) wenigstens eine schlitzförmige Ausnehmung (14a, 14b, 14d) zur Aufnahme einer Wischleiste aufweist.

## Claims

1. Wiper lever comprising a wiper arm (10a-10h) and a wiper blade (12a-12h) which is connected joint-free to the wiper arm (10a-10h), wherein the wiper arm (10a-10g) and the wiper blade (12a-12g) are designed at least partly in one piece, **characterized in that** the wiper blade (12e-12h) is connected, between its wiper blade ends, to the wiper arm (10e-10h) via at least one spring-elastic crosspiece.

2. Wiper lever according to Claim 1, **characterized in that** the wiper arm (10a-10h) and the wiper blade (12a-12h) are connected via at least one spring-elastic connecting part (16a-16h).

3. Wiper lever according to Claim 1 or 2, **characterized in that** the wiper blade (12a-12h) has a spring-elastic wiper strip carrier element (18a-18h) which is connected joint-free to the wiper arm (10a-10h) and on whose concave side a wiper lip of a wiper strip extends in the mounted state.

4. Wiper lever according to one of the preceding claims, **characterized in that** the wiper arm (10a-10h) has at least one spring-elastic carrier element (20a-20h).

5. Wiper lever at least according to Claim 2, **characterized in that** the connecting part (16a-16h) is designed in one piece with at least one spring-elastic carrier element (18a-18g, 20a-20h).

6. Wiper lever according to Claim 5, **characterized in that** the wiper arm (10a-10g) and the wiper blade (12a-12g) are formed from a common stamped and bent part.

7. Wiper lever according to one of the preceding claims, **characterized in that** the wiper blade (12a) is also connected via its outer wiper blade end to the wiper arm (10a).

8. Wiper lever according to one of the preceding claims, **characterized in that** the wiper blade (12b-12d) is also connected via its inner wiper blade end to the wiper arm (10b-10d).

9. Wiper lever according to one of the preceding claims, **characterized in that** the wiper arm (10a, 10b, 10d, 10g) and the wiper blade (12a, 12b, 12d, 12g) are connected via at least one deflection (22a, 22b, 22d, 22g) with an angle of greater than 90°.

10. Wiper lever according to one of the preceding claims, **characterized in that** the wiper blade (12a, 12b, 12d) has at least one slot-like cutout (14a, 14b, 14d) for receiving a wiper strip.

## Revendications

1. Ensemble à bras d'essuie-glace comprenant un bras d'essuie-glace 10a- 10h) et une lame d'essuie-glace (12a-12h), le bras étant relié à la lame d'essuie-glace (12a-12h) sans articulation, le bras d'essuie-glace (10a-10g) et la lame d'essuie-glace (12a-12g) étant réalisés au moins partiellement en une seule pièce,
**caractérisé en ce que**
la lame d'essuie-glace (12a-12h) est reliée entre ses extrémités au bras d'essuie-glace (10e-10h) par au moins un élément transversal élastique comme un ressort à la lame d'essuie-glace (12c-12g).

2. Ensemble à bras d'essuie-glace selon la revendication 1,
**caractérisé en ce que**
le bras d'essuie-glace (10a-10h) et la lame d'essuie-glace (12a-12h) sont reliés par au moins une pièce de liaison élastique comme un ressort (16a-16h) .

3. Ensemble à bras d'essuie-glace selon la revendication 1 ou 2,
**caractérisé en ce que**
la lame d'essuie-glace (12a-12h) est reliée sans articulation au bras d'essuie-glace (10a-10h) et comporte un élément de support de lame (18a-18h) élastique comme un ressort et à l'état monté, la lèvre de la lame d'essuie-glace s'étend contre le côté concave de cet élément.

4. Ensemble à bras d'essuie-glace selon l'une des revendications précédèntes,
**caractérisé en ce que**
le bras d'essuie-glace (10a-10h) comporte au moins un élément de support élastique comme un ressort (20a-20h).

5. Ensemble à bras d'essuie-glace au moins selon la revendication 2,
**caractérisé en ce que**
la pièce de liaison (16a-16h) est réalisée en une seule partie avec au moins un élément de support élastique comme un ressort (18a-18g, 20a-20h).

6. Ensemble à bras d'essuie-glace selon la revendication 5,
**caractérisé en ce que**
le bras d'essuie-glace (10a-10g) et la lame d'essuie-glace (12a-12g) sont réalisés en une seule pièce emboutie et cintrée.

7. Ensemble à bras d'essuie-glace selon l'une des revendications précédentes,
**caractérisé en ce que**
la lame d'essuie-glace (12a) est également reliée par son extrémité extérieure au bras d'essuie-glace (10a).

8. Ensemble à bras d'essuie-glace selon l'une des revendications précédentes,
**caractérisé en ce que**
le balai d'essuie-glace (12b-12d) est également relié par son extrémité intérieure au bras d'essuie-glace (12b-12d).

9. Ensemble à bras d'essuie-glace selon l'une des revendications précédentes,
**caractérisé en ce que**
le bras d'essuie-glace (10a, 10b, 10d, 10g) et la lame d'essuie-glace (12a, 12b, 12d, 12g) sont reliés par un retour (22a, 22b, 22d, 22g) ayant un angle supérieur à 90°.

10. Ensemble à bras d'essuie-glace selon l'une des revendications précédentes,
**caractérisé en ce que**
la lame d'essuie-glace (12a, 12b, 12d) comporte au moins une cavité en forme de fente (14a, 14b, 14d) pour recevoir une lame d'essuie-glace.
